(19) Europäisches Patentamt
European Patent Office
Office européen des brevets

(11) **EP 3 267 393 A1**

(12) **EUROPÄISCHE PATENTANMELDUNG**

(43) Veröffentlichungstag:
**10.01.2018 Patentblatt 2018/02**

(51) Int Cl.:
**G06T 5/00** (2006.01)  **G06T 5/10** (2006.01)

(21) Anmeldenummer: **16178151.3**

(22) Anmeldetag: **06.07.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Christian-Albrechts-Universität zu Kiel 24118 Kiel (DE)**

(72) Erfinder: **Zelenka, Claudius 24248 Mönkeberg (DE)**

(74) Vertreter: **Hansen, Jochen Hansen und Heeschen Patentanwälte Eisenbahnstrasse 5 21680 Stade (DE)**

(54) **SCHNELLES BILDKORREKTURVERFAHREN FÜR EINE VEREINFACHTE ADAPTIVE OPTIK**

(57) Die Erfindung betrifft ein Rechnergestütztes Bildkorrekturverfahren für Abbildungen mit vorbestimmten optischen Abbildungsfehlern, wobei wenigstens räumlich teilkohärentes Licht auf einen elektronischen, zweidimensionalen Bildsensor mit lichtsensitiven Pixeln geführt wird, aufweisend die Schritte: Identifizieren der vorbestimmten optischen Abbildungsfehler mit der vorbestimmten Deformation der Wellenfront des einfallenden Lichtwellenfeldes gegenüber einer ebenen Welle und Bereitstellen einer die Deformation repräsentierenden Phasenmodulation als eine Funktion der Pixelkoordinaten des Bildsensors; Erfassen eines Bildes auf dem Bildsensor; Berechnen eines ersten phasenmodulierten Lichtwellenfeldes aus dem Bild; Berechnen eines korrigierten Lichtwellenfeldes durch zweifache Fourier-Transformation des ersten phasenmodulierten Lichtwellenfeldes unter Entfernen der Phasenmodulation; Annehmen einer ebenen Wellenfront für das korrigierte Lichtwellenfeld durch Gleichsetzen der Phase auf allen Pixelkoordinaten; Berechnen eines zweiten phasenmodulierten Lichtwellenfeldes durch zweifache Fourier-Transformation des korrigierten Lichtwellenfeldes unter Hinzufügen der Phasenmodulation; Ersetzen der Amplituden des zweiten phasenmodulierten Lichtwellenfeldes durch die Amplituden des ersten phasenmodulierten Lichtwellenfeldes unter Beibehaltung der berechneten Phasen des zweiten phasenmodulierten Lichtwellenfeldes auf allen Pixelkoordinaten; Annehmen des Ergebnisses aus Schritt g als erstes phasenmoduliertes Lichtwellenfeld und iterierendes Wiederholen der Schritte d bis h bis zum Erfüllen eines Konvergenzkriteriums; Berechnen eines korrigierten Bildes aus dem korrigierten Lichtwellenfeld bei Erfüllen des Konvergenzkriteriums.

Ferner betrifft die Erfindung eine Vorrichtung zur Verwendung als adaptive Optik sowie ein Maschinenlesbares Speichermedium.

Abbildung 1

**Beschreibung**

Die Erfindung betrifft ein rechnergestütztes Bildkorrekturverfahren für Abbildungen mit wenigstens räumlich teilkohärentem Licht. Die Erfindung betrifft weiterhin eine Vorrichtung, die unter Anwendung des Bildkorrekturverfahrens als adaptive Optik für abbildende Instrumente verwendbar ist.

Der Stand der Technik kennt die technische Aufgabe, das von Objekten reflektierte oder gestreute Licht auf elektronische Bildsensoren mit die Lichtintensität messenden Pixeln abzubilden und das so erfasste Bild als elektronisch lesbare Datei mit Messwerten, z.B. Farb- oder Grauwerten, zu speichern. Dabei können optische Abbildungsfehler auftreten, die von den zur Abbildung verwendeten Linsen, von Brechungsindexschwankungen in den vom Licht durchquerten Medien und/oder auch von fehlerhaften Anordnungen der optischen Komponenten zueinander herrühren, z.B. Defokus.

Mit Ausnahme der durch endlich große Linse bzw. Aperturen unvermeidlichen Beugungseffekte können die optischen Abbildungsfehler grundsätzlich korrigiert werden, beispielsweise durch speziell geschliffene Ausgleichslinsen als Asphären oder Applanate oder durch asphärische Spiegel. Fest installierte Ausgleichslinsen oder starre Ausgleichsspiegel passen sich aber zeitlich veränderlichen Abbildungsfehlern nicht an, so dass für hochpräzise Teleskope und Mikroskope adaptive Optiken zum Einsatz kommen.

Für elektronisch erfasste und gespeicherte Bilder stehen überdies heute Nachbearbeitungsverfahren zur Verfügung, die aus einem fehlerbehafteten Bild ein korrigiertes Bild errechnen können, etwa nachzulesen in P. A. Jansson, Hrsg., Deconvolution of images and spectra, 2nd ed. Dover ed. Mineola, N.Y: Dover Publications, 2012. Diese sind jedoch auf Abbildungen mit inkohärentem Licht ausgelegt, bei denen keine Interferenzstreifen oder Interferenzringe entstehen. Abbildungen von kohärentem und inkohärentem Licht werden mathematisch unterschiedlich beschrieben, nämlich für kohärentes Licht als lineares Funktional der Lichtwellenamplitude und für inkohärentes Licht als lineares Funktional der Lichtintensität. Die vorgenannten Bildkorrekturverfahren versagen deshalb im Fall von wenigstens räumlich teilkohärentem Licht.

Sowohl hochauflösende Teleskope zur Beobachtung des Sternenhimmels als auch Präzisionsmikroskope mit eingebauten LED-Lichtquellen erfassen wenigstens räumlich teilkohärentes Licht und führen dieses gewöhnlich auch auf eine elektronische Kamera. Die optischen Abbildungsfehler - ausgenommen solche Fehler, die aus der Endlichkeit der Apertur begründet sind - bewirken eine Deformation oder Verzerrung der Wellenfront ("wavefront distortion") des auf dem Bildsensor eintreffenden Lichtwellenfeldes, die vorwiegend - aber nicht nur- durch Fluktuationen des Mediums im Objektraum, z.B. Atmosphäre oder Immersionsflüssigkeit, hervorgerufen wird.

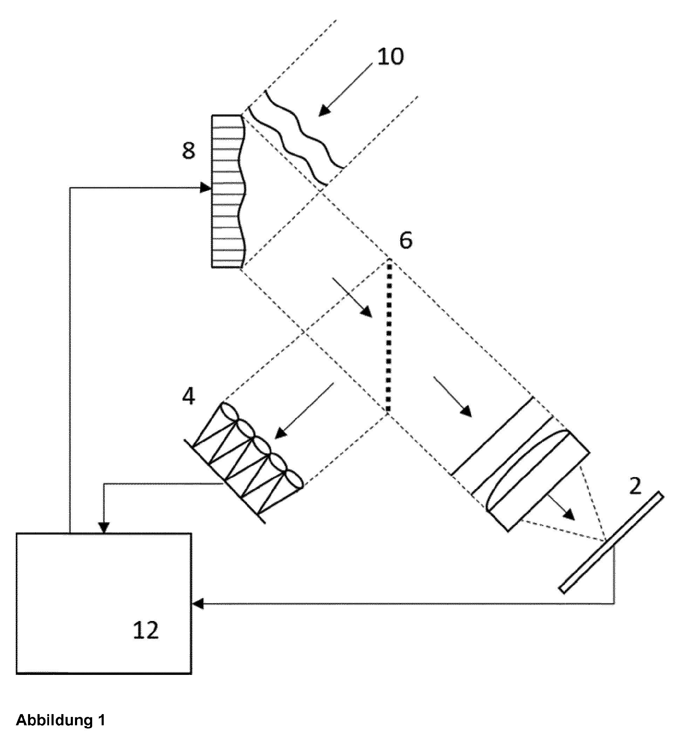

Ein beispielhafter Aufbau einer adaptiven Optik nach dem Stand der Technik ist der Abb. 1 zu entnehmen.

Eine adaptive Optik umfasst üblich einen Sensor (4) zur Messung der Deformation der Wellenfront, der beispielsweise als ein Shack-Hartmann-Sensor ausgestaltet sein kann. Kommerziell erhältliche Wellenfrontsensoren (4) sind üblich dazu ausgebildet, die Abbildungsfehler in numerischer Form, beispielsweise als ein Array von Weglängendifferenzen zwischen den einzelnen lokalen Bereichen der Wellenfront, zu erfassen, darzustellen und zur weiteren Verwendung auszugeben. Der Wellenfrontsensor (4) kann ferner dazu ausgebildet sein, die Messdaten zu interpolieren und/oder eine mathematische Darstellung der Abbildungsfehler zu errechnen, beispielsweise eine Entwicklung nach Zernike-Polynomen, und die Entwicklungskoeffizienten auszugeben.

Eine adaptive Optik nach dem Stand der Technik umfasst weiterhin ein optisches Ausgleichselement (8). Hierfür kommen beispielsweise elektronisch ansteuerbare räumliche Lichtmodulatoren oder deformierbare Spiegel in Frage. Weiterhin ist eine Steuereinrichtung (12) zur Ansteuerung einzelner Elemente des Ausgleichselements (8) vorgesehen, wobei die Steuereinrichtung (12) beispielsweise ein herkömmlicher Personal Computer sein kann.

Die Wirkungsweise der adaptiven Optik besteht im Wesentlichen darin, das einfallende Licht (10) zunächst - üblich weitgehend kollimiert - auf das Ausgleichselement (8) zu führen, wo es transmittiert oder reflektiert wird, das Licht hiernach mit einem Strahlteiler (6) aufzuteilen und je einen Teilstrahl auf den Wellenfrontsensor (4) zu lenken und auf den Bildsensor (2) zu fokussieren. Zugleich werden die Messdaten des Wellenfrontsensors (4) zur Ansteuerung des Ausgleichselements (8) derart verwendet, dass die Deformation der Wellenfront möglichst vollständig kompensiert wird. Insbesondere kann z.B. ein deformierbarer Spiegel als Ausgleichselement (8) vorgesehen sein, der ein Array von elektronisch ansteuerbaren Stellelementen, z.B. Piezoelemente, aufweist, um die Spiegelfläche zu verformen. Die mit dem Wellenfrontsensor (4) gemessenen Weglängendifferenzen der lokalen Bereiche der einfallenden Wellenfront (10) können durch eine Ansteuerung zum Verstellen einzelner Stellelemente direkt kompensiert werden, so dass die reflektierte Wellenfront wieder annähernd eben ist.

Bei gelungener Kompensation der Wellenfrontverzerrung entsteht durch die Fokussierung auf dem Bildsensor (2) ein scharfes Bild.

Ausgleichselemente (8) in adaptiven Optiken können in Echtzeit angesteuert und neu konfiguriert werden, wenn sich die optischen Abbildungsfehler ändern. Dies ist vor allem bei Brechungsindexschwankungen im Medium der Fall, die unvorhersehbar sind und nur durch Messungen mit Wellenfrontsensoren (4) erkannt werden können.

Auf die teuren und auch nicht immer zuverlässig arbeitenden Ausgleichselemente (8) würde man aber gern verzichten und stattdessen eine rein numerische Korrektur der gemessenen Farb- oder Grauwerte auf dem Bildsensor (2) auf Basis der während der Bilderfassung ebenfalls gemessenen Wellenfrontverzerrung anstreben.

Die Erfindung stellt sich deshalb die Aufgabe, ein rechnergestütztes Bildkorrekturverfahren sowie eine Vorrichtung zur Verwendung als adaptive Optik mit Hilfe des schnellen Bildkorrekturverfahrens bereitzustellen.

Die Aufgabe wird gelöst durch ein Bildkorrekturverfahren mit den Schritten nach Anspruch 1. Die Unteransprüche geben vorteilhafte Ausgestaltungen an und sind auch auf eine Vorrichtung zur Verwendung als adaptive Optik gerichtet.

Wie bereits erwähnt, betrachtet die Erfindung die messbare Wellenfrontverzerrung einlaufender, an sich ebener Lichtwellen als ein Maß für optische Abbildungsfehler unabhängig von Ort und Ursache ihres Entstehens. Die Erfindung nimmt für sich auch nur in Anspruch, solche Abbildungsfehler korrigieren zu können, die sich als messbare Wellenfrontverzerrung erfassen lassen. Es sei jedoch erwähnt, dass neben den Medienfluktuationen, die zu Brechungsindexschwankungen führen, auch die Abbildungseigenschaften der Linsensysteme, z.B. Aberrationen, Astigmatismus, Koma und dergleichen zu Wellenfrontverzerrungen führen können. Da das nachstehend beschriebene Korrekturverfahren nicht nach den Ursachen der Verzerrungen unterscheiden kann, werden solche Fehler automatisch mit korrigiert. Dies bedeutet aber, auf die optische Qualität der abbildenden Linsen kommt es bei Nutzung der Erfindung nicht so sehr an; man kann auch preisgünstige optische Komponenten verwenden.

Das erfindungsgemäße Bildkorrekturverfahren ist erstaunlich einfach und wird auch anhand der folgenden Figuren erläutert. Dabei zeigt:

Abb. 1    eine Skizze einer adaptiven Optik nach dem Stand der Technik;

Abb. 2    Realaufnahmen eines Testobjekts für Mikroskope a) fokussiert, b) defokussiert und c) numerische rekonstruiert;

Abb. 3    eine synthetische Bildverzerrung, wobei a) das Original und b) das verzerrte Bild zeigt sowie c) die zur Verzerrung verwendete Wellenfrontdeformation;

Abb. 4    die numerische Rekonstruktion des Bildes aus Abb. 3 b) nach a) 10 Iterationen und b) 500 Iterationen;

Abb. 5    eine Skizze einer vereinfachten adaptiven Optik, deren Recheneinheit das Bildkorrekturverfahren nutzt.

Die Verzerrung einer einlaufenden, an sich ebenen Wellenfront des Lichtwellenfeldes ist nichts anderes als die Gesamtheit der Weglängendifferenzen zwischen den verschiedenen lokalen Bereichen der Wellenfront. Mithin ist die Phasenlage der Lichtwelle vor der Fokussierung entlang einer Koordinatenebene senkrecht zur optischen Achse moduliert. Die ortsabhängig phasenmodulierte Wellenfunktion wird dann auf den Bildsensor fokussiert, so dass in der Ebene des Bildsensors ein Lichtwellenfeld vorliegt und erfasst wird, das eine Durchmischung von unterschiedlich phasenmodulierten - und damit teilweise fehlgerichteten - Lichtanteilen sowie deren Interferenzen auf den Pixeln des Bildsensors aufweist.

Die Phasenmodulation vor der Fokussierung $P(x, y) = \exp(ik\Delta(x,y))$ kann man aus den Weglängendifferenzen $\Delta(x, y)$ der Wellenfrontverzerrung mit $k = 2\pi/\lambda$ und $\lambda$ als Wellenlänge des hier monochromatischen Lichts erhalten. Ein gängiger Wellenfrontsensor gibt in der Regel $\Delta$ in Einheiten der Wellenlänge aus und ist oft auch zur Interpolation auf die Pixelkoordinaten des Bildsensors in der Lage.

Unter Ausnutzung der an sich bekannten Tatsache, dass die Fokussierung einer Fourier-Transformation des Lichtwellenfeldes entspricht, kann man das phasenmodulierte Lichtwellenfeld $E_M$ mit einem ungestörten Lichtwellenfeld $E_0$, das keine Wellenfrontverzerrungen aufweist, so beschreiben:

$$(1)\ E_M = F(E_0 * P)$$

Dies bedeutet, die Wellenfunktion $E_0(x, y)$ wird zunächst mit der ortsabhängigen Phasenmodulation $P(x, y)$ pixelweise - also dargestellt in Pixelkoordinaten des Bildsensors, auch wenn $E_0$ nicht auf dem Bildsensor vorliegt - multipliziert, und hiernach erfolgt die Fourier-Transformation des Produkts.

Bevorzugt kann hierfür ein komplexer Fast-Fourier-Transform (FFT) Algorithmus in zwei Dimensionen verwendet werden, und wir notieren hier kurz $F(...)$ und $F^{-1}(...)$ als Operatoren für die Fourier-Transformation und die inverse Fourier-Transformation, respektive. Die Ausführung beider Operatoren hintereinander entspricht der Identität ggf. bis auf einen konstanten Offsetwert.

Eine Bildkorrektur darf man erwarten, wenn man anstelle von $E_M$ ein Lichtwellenfeld $E_K$ auf dem Bildsensor vorliegen hätte, das sich als

$$(2)\ E_K = F(\ E_0)$$

beschreiben ließe. Doch da sich die komplexen Lichtwellenfelder $E_M$ nicht messen lassen, kann man sich einer Berechnung von $E_K$ nur numerisch iterativ nähern. Aus (1) und (2) ergeben sich

$$(3)\ E_K = F(\ P^{-1} * F^{-1}(E_M)\ )$$

$$(4)\ E_M = F(\ P * F^{-1}(E_K)\ )$$

mit $P^{-1}\ (x,\ y) = \exp(-ik\Delta(x,y))$ als konjugierte Phasenmodulation.

Erfindungsgemäß werden deshalb (3) und (4) zum Aufsetzen einer numerischen Iterationsschleife benutzt. Dabei beschreibt (3) die zweifache Fourier-Transformation des phasenmodulierten Lichtwellenfeldes $E_M$ unter Entfernen der Phasenmodulation. Demgegenüber beschreibt (4) die zweifache Fourier-Transformation des Lichtwellenfeldes $E_K$ unter Hinzufügen der Phasenmodulation.

Zunächst wird die Intensitätsverteilung $I(x,\ y)$ auf dem Bildsensor als Bild erfasst, und hieraus wird ein erstes phasenmoduliertes Lichtwellenfeld

$$(5)\ E_M^{(1)}(x,y) = \sqrt{I(x,y)}\ e^{i\varphi_0(x,y)}$$

auf den Pixelkoordinaten $x,y$ mit beliebigen, d.h. beispielsweise zufälligen oder einheitlichen Anfangswerten der Phase $\varphi_0(x,y)$ berechnet. Mit $n$ als natürlicher Zahl wird dann ein korrigiertes, d.h. von der vorbestimmten Phasenmodulation bereinigtes, Lichtwellenfeld als

$$(6)\ E_K^{(n)} = F\left(P^{-1} * F^{-1}\left(E_M^{(n)}\right)\right)$$

näherungsweise bestimmt, welches der Nebenbedingung genügen soll, dass es auf allen Pixeln des Bildsensors die gleiche Phase aufweist. Dabei ist

$$(7)\ E_K^{(n)}(x,y) = \sqrt{\left|E_K^{(n)}(x,y)\right|^2}\ e^{i\varphi^{(n)}(x,y)}$$

und die Phasen $\varphi^{(n)}(x,y)$ werden alle auf einen beliebigen konstanten Wert, beispielsweise und bevorzugt auf null, gesetzt. In anderen Worten ausgedrückt werden die Zeiger der komplexen Werte von $E_K^{(n)}$ auf eine vorbestimmte Achse, vorzugsweise die reelle Achse, gedreht. Man erhält so vorzugsweise das Update

$$(8)\ E_K^{(n+1)}(x,y) = \sqrt{\left|E_K^{(n)}(x,y)\right|^2}$$

Die so gewonnene Verteilung enthält nur positive reelle Werte. Die praktische Erprobung des Algorithmus hat ergeben, dass die Festlegung auf eine ausschließlich positive Amplitudenverteilung das Ergebnis nicht sichtbar beeinflusst und sogar zu besserer Konvergenz führen kann.

Weiter wird hieraus ein zweites phasenmoduliertes Lichtwellenfeld

$$(9)\ E_M^{(n+1)} = F\left(P * F^{-1}\left(E_K^{(n+1)}\right)\right)$$

gemäß (4) berechnet. Dieses wiederum muss das erfasste Bild als Intensitätsverteilung aufweisen, also es soll gelten:

$$(10) \qquad I(x,y) = \left| E_M^{(n+1)}(x,y) \right|^2 = \left| E_M^{(1)}(x,y) \right|^2$$

Deshalb wird das zweite phasenmodulierte Lichtwellenfeld

$$(11) \qquad E_M^{(n+1)}(x,y) = \sqrt{\left| E_M^{(n+1)}(x,y) \right|^2} \, e^{i\delta^{(n+1)}(x,y)}$$

in einem weiteren Update-Schritt ersetzt durch

$$(12) \qquad E_M^{(n+2)}(x,y) = \sqrt{\left| E_M^{(1)}(x,y) \right|^2} \, e^{i\delta^{(n+1)}(x,y)}$$

unter Beibehaltung der Phasen $\delta^{(n+1)}(x, y)$, die sich aus der Berechnung von (9) ergeben haben. Mit dem Ergebnis von (12) kann man in die nächste Iterationsschleife beginnend mit (6) gehen und bis zur Konvergenz iterieren.

Konvergenz ist erreicht, wenn die Phasen $\varphi^{(n)}(x, y)$ als Ergebnis von (7) eine vorbestimmte Minimierung der pixelweisen Varianz zeigen, d.h. wenn sie im Wesentlichen bereits eine von $(x, y)$ unabhängige Konstante, beispielsweise null, sind.

Alternativ ist Konvergenz erreicht, wenn der pixelweise Differenzbetrag der Amplituden des zweiten und des ersten phasenmodulierten Lichtwellenfeldes ein vorbestimmtes Minimierungskriterium erfüllt, beispielsweise

$$(13) \qquad \sum_{x,y} \left| \sqrt{\left| E_M^{(n+1)}(x,y) \right|^2} - \sqrt{\left| E_M^{(n)}(x,y) \right|^2} \right| < \varepsilon$$

mit einem vorbestimmten reellen Zahlenwert $\varepsilon > 0$. Die Summation läuft dabei über alle Pixel.

Hierbei ist die Ausgabe $E_M^{(n+1)}$ von (9) mit der Eingabe $E_M^{(n)}$ in (6) zu vergleichen.

Beide Konvergenzkriterien sind geeignet, dasselbe Resultat der Iteration zu erzielen. Man kann auch fordern, dass beide simultan erfüllt sein müssen.

Bei Erreichen der Konvergenz ist das zuletzt berechnete korrigierte Lichtwellenfeld $E_K$ das eigentliche Resultat des Bildkorrekturverfahrens. Sein Absolutquadrat als Intensitätsverteilung über die Pixelkoordinaten stellt ein verbessertes, insbesondere schärferes Bild dar als das ursprünglich mit dem Bildsensor erfasste Bild. Die Abbildungsfehler, die mit Wellenfrontverzerrungen einhergehen, sind dann weitgehend beseitigt.

Das erfindungsgemäße rechnergestützte Bildkorrekturverfahren für Abbildungen mit vorbestimmten Abbildungsfehlern, wobei wenigstens räumlich teilkohärentes Licht auf einen elektronischen, zweidimensionalen Bildsensor mit lichtsensitiven Pixeln geführt wird, weist die folgenden Schritte auf:

a. Identifizieren der vorbestimmten optischen Abbildungsfehler mit der vorbestimmten Deformation der Wellenfront des einfallenden Lichtwellenfeldes gegenüber einer ebenen Welle und Bereitstellen einer die Deformation repräsentierenden Phasenmodulation als eine Funktion der Pixelkoordinaten des Bildsensors;

b. Erfassen eines Bildes auf dem Bildsensor;

c. Berechnen eines ersten phasenmodulierten Lichtwellenfeldes aus dem Bild;

d. Berechnen eines korrigierten Lichtwellenfeldes durch zweifache Fourier-Transformation des ersten phasenmodulierten Lichtwellenfeldes unter Entfernen der Phasenmodulation;

e. Annehmen einer ebenen Wellenfront für das korrigierte Lichtwellenfeld durch Gleichsetzen der Phase auf allen Pixelkoordinaten;

f. Berechnen eines zweiten phasenmodulierten Lichtwellenfeldes durch zweifache Fourier-Transformation des korrigierten Lichtwellenfeldes unter Hinzufügen der Phasenmodulation;

g. Ersetzen der Amplituden des zweiten phasenmodulierten Lichtwellenfeldes durch die Amplituden des ersten phasenmodulierten Lichtwellenfeldes unter Beibehaltung der berechneten Phasen des zweiten phasenmodulierten Lichtwellenfeldes auf allen Pixelkoordinaten;

h. Annehmen des Ergebnisses aus Schritt g als erstes phasenmoduliertes Lichtwellenfeld und iterierendes Wiederholen der Schritte d bis h bis zum Erfüllen eines Konvergenzkriteriums;

i. Berechnen eines korrigierten Bildes aus dem korrigierten Lichtwellenfeld bei Erfüllen des Konvergenzkriteriums.

Das erfindungsgemäße Verfahren erinnert den Fachmann an einen Gerchberg-Saxton-Algorithmus ("A Practical Algorithm for the Determination of Phase from Image and Diffraction Plane Pictures", Optik, Vol. 35, No. 2, (1972) pp. 237-246) zur Phasenwiedergewinnung ("phase retrieval") bei einer Abbildung mit kohärentem Licht. Doch solche Algorithmen zur Phasenwiedergewinnung bedürfen üblich einer Mehrzahl von unterschiedlich phasenmodulierten, ggf. unterschiedlich defokussierten, Bildern, die innerhalb einer Iterationsschleife zur Erfüllung von Nebenbedingungen ("constraints") herangezogen werden.

Die Erfindung benötigt hingegen nur ein phasenmoduliertes Bild als Eingabe, und sie rekonstruiert auch nicht die Phasen auf dem Bildsensor, sondern geht vielmehr davon aus, dass diese dort idealerweise alle gleich sein sollten. Mit dieser Annahme formuliert die Erfindung eine Nebenbedingung - Schritt e - und beispielhaft die Update-Regel (8). Das Ergebnis der Iteration ist eine Amplitudenverteilung des Lichtwellenfeldes, das man direkt hätte messen können, wenn nicht bei der tatsächlichen Bilderfassung Abbildungsfehler in Form von Wellenfrontverzerrungen mitgewirkt hätten.

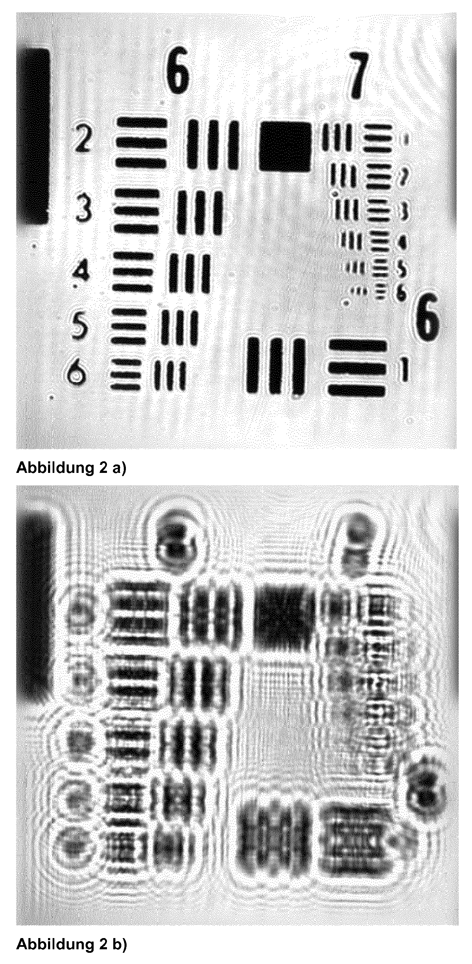

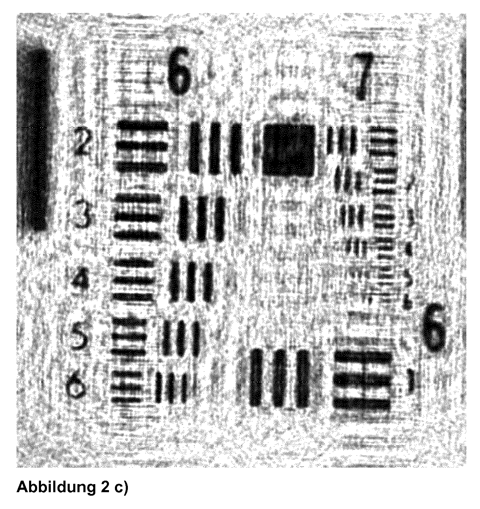

Als ein Ausführungsbeispiel wird die Anwendung des Bildkorrekturverfahrens auf die digitale Abbildung eines herkömmlichen Testobjekts für Mikroskope demonstriert. Das ebene Testobjekt wird hierfür mit Licht aus einer Leuchtdiode der mittleren Wellenlänge 650 Nanometer durchstrahlt, und das transmittierte Licht wird mit einer digitalen Kamera anstelle des Okulars auf einen Bildsensor abgebildet. Es wird eine Serie von Bildern für verschiedene Abstände des Testobjekts aufgezeichnet mit einer Schrittweite von 50 Mikrometer. Das schärfste Bild des Testobjekts ist in Abb. 2 a) zu sehen, während in Abb. 2 b) ein stark defokussiertes Bild gezeigt wird, das bei Verschiebung des Testobjekts um 1950 Mikrometer entlang der optischen Achse entsteht.

Der in Abb. 2 b) wirksame Abbildungsfehler ist somit hier als ein Defokus vorbestimmt und quantifiziert und kann in der Form

$$(14) \qquad P(x, y) = \exp\left(ik \frac{x^2 + y^2}{2r}\right)$$

beschrieben werden. Dabei ist r der Krümmungsradius der Wellenfront, den man entweder direkt messen oder mittels eines Abbildungssimulationsprogramms durch eine Modellierung des Messaufbaus unter Einbeziehung des Defokus errechnen kann.

Mit der vorbestimmten Phasenmodulation aus (14) und dem phasenmodulierten Bild aus Abb. 2 b) als Eingaben kann das erfindungsgemäße Bildkorrekturverfahren durchgeführt werden und liefert als Ergebnis das Bild in Abb. 2 c). Hierbei ist anzumerken, dass es vorteilhaft sein kann, auf das Eingabebild vor der Bildkorrektur zunächst einen Algorithmus zur Verwischung der Randpunkte ("edge tapering") anzuwenden, um Artefakte bei den FFT-Operationen zu reduzieren.

Die Bildkorrektur im Vergleich der Bilder in Abb. 2 bestätigt die Annahme, dass gewöhnliche Leuchtdioden Licht mit ausreichender räumlicher Kohärenz zur Durchführung des hier vorgestellten Bildkorrekturverfahrens erzeugen.

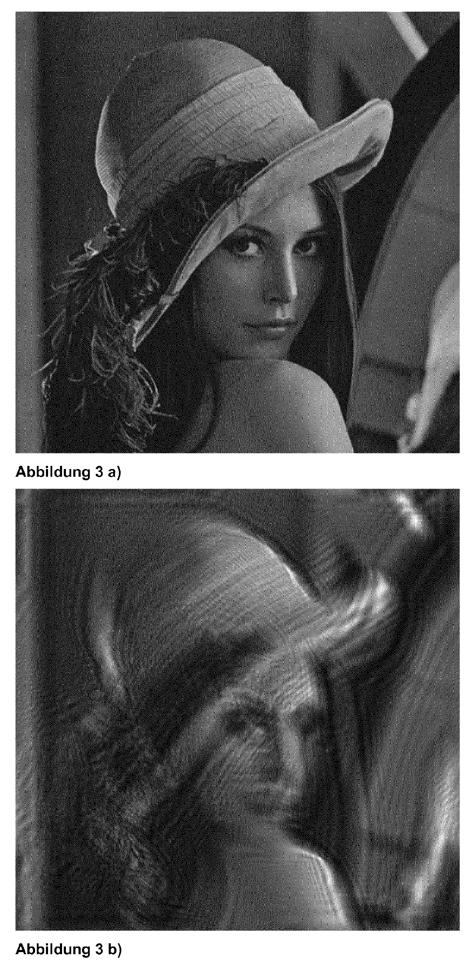

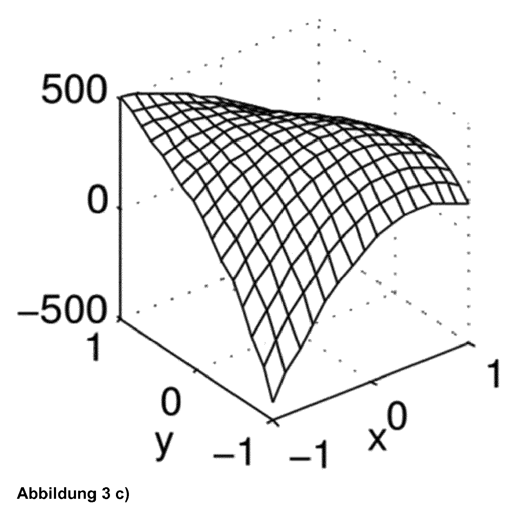

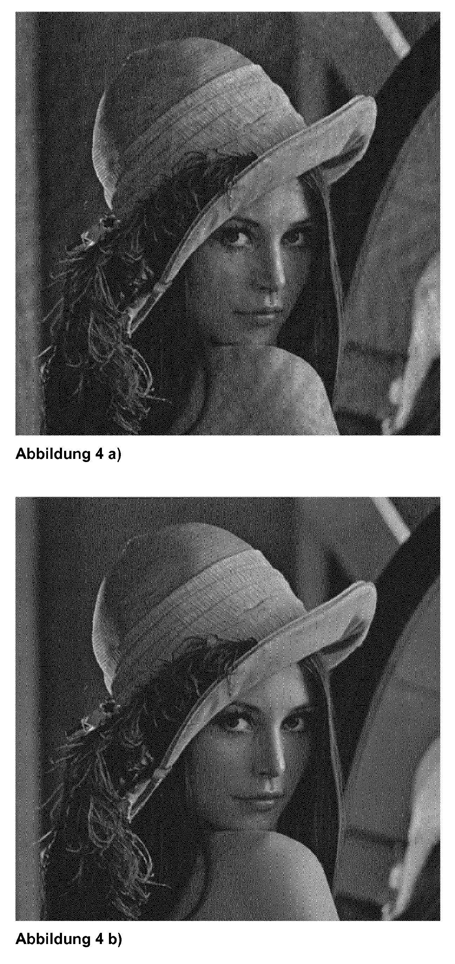

Ein zweites Ausführungsbeispiel soll zeigen, dass die Bildkorrektur sich auch auf Bilder anwenden lässt, die mit komplizierteren Abbildungsfehlern als einem Defokus erzeugt worden sind. Zu diesem Zweck wird ein Originalbild in Abb. 3 a) mit einer vorbestimmten Wellenfrontverzerrung in einer simulierten Abbildung gefaltet. Das Ergebnis ist das berechnete Bild in Abb. 3 b). Die hier benutzte Wellenfrontverzerrung ist eine Kombination aus den Aberrationen Defokus, Astigmatismus und Koma und in Abb. 3 c) als Weglängendifferenzen $\Delta(x, y)$ graphisch dargestellt. Mit der Phasenmodulation $P(x, y) = \exp(ik\Delta(x, y))$ und dem Bild aus Abb. 3 b) als Eingaben führt das erfindungsgemäße Bildkorrekturverfahren nach Durchlaufen von nur 10 Iterationsschleifen auf das korrigierte Bild in Abb. 4 a), und es erzielt nach etwa 500 Iterationen eine annähernd perfekte Korrektur in Abb. 4 b). Eine einzelne Iterationsschleife für ein Bild mit 512 x 512 Pixeln auf einem 4 GHz PC beansprucht in der gegenwärtigen Implementation etwa 14 Millisekunden.

Die relativ schnelle Konvergenz zu einem deutlich verbesserten, für manche Zwecke sicherlich ausreichend scharfen Bild mit einem Rechenbedarf in der Größenordnung 1 Sekunde oder weniger empfehlen die Erwägung von Echtzeit-Anwendungen für das Bildkorrekturverfahren. Zudem ist es bei einer Echtzeit-Anwendung nicht erforderlich, die Iterationsschleife ständig mit einem Zufallsarray zu initialisieren, wodurch die Konvergenz extrem beschleunigt wird.

Als besonders vorteilhaft wird dabei angesehen, dass Anwendungen in Betracht gezogen werden können, bei denen die optischen Abbildungsfehler einer zeitlichen Veränderung unterliegen, also insbesondere solche, die einen Wellenfrontsensor verwenden müssen.

In einer Vorüberlegung wird dafür untersucht, ob die mit einem kommerziell erhältlichen Shack-Hartmann-Sensor messbaren Daten eine für die Anwendung des Verfahrens ausreichende Information liefern. Anhand des Datenblatts eines solchen Sensors mit 19 x 13 Lenslets, einer angegebenen Messgenauigkeit von $\lambda/50$ und einer angegebenen Messdynamik von mindestens 50 $\lambda$ bei der Wellenlänge $\lambda$ = 633 Nanometer werden verschiedene Wellenfrontdeformationen als Messdatensätze mit Gauß'schem Rauschen simuliert und zur Bildkorrektur verwendet. Es zeigt sich, dass eine gute Wiederherstellung des Bildes erzielt werden kann. Selbst mit wesentlich verringerter Messgenauigkeit sind die Ergebnisse noch akzeptabel. Das erfindungsgemäße Verfahren ist auch bei der Verwendung von kommerziellen Wellenfrontsensoren anwendbar.

Da ein Wellenfrontsensor die instantane Messung der Wellenfrontdeformation erlaubt, ist es eine bevorzugte Ausgestaltung der Erfindung, das Vorbestimmen optischer Abbildungsfehler und das Bereitstellen der Phasenmodulation in regelmäßigen Zeitabständen zu wiederholen.

Eine weitere bevorzugte Ausgestaltung der Erfindung wird darin gesehen, dass eine Mehrzahl von Bildern zeitlich nacheinander auf dem Bildsensor erfasst wird, wobei zwischen zwei Erfassungszeitpunkten bis zur Konvergenz iteriert wird.

Als eine Kombination der vorgenannten Ausgestaltungen ist es vorteilhaft, dass eine zeitliche Sequenz von Bildern iterativ korrigiert wird, wobei das Vorbestimmen der optischen Abbildungsfehler für die Korrektur einzelner Bilder zeitlich mit der Sequenz Schritt haltend erfolgt. Hierfür ist es zu bevorzugen, dass das Vorbestimmen der optischen Abbildungsfehler mittels Messen der Wellenfrontverzerrung des einfallenden Lichtwellenfeldes in einer vorbestimmten Zeitumgebung des Erfassens des Bildes erfolgt. Es ist dabei zu verstehen, dass die Zeitumgebung dabei so vorzubestimmen ist, dass ein zweckdienlicher Zusammenhang zwischen dem Zeitpunkt der Bilderfassung und dem Zeitpunkt der Wellenfrontmessung zumindest unterstellt werden kann.

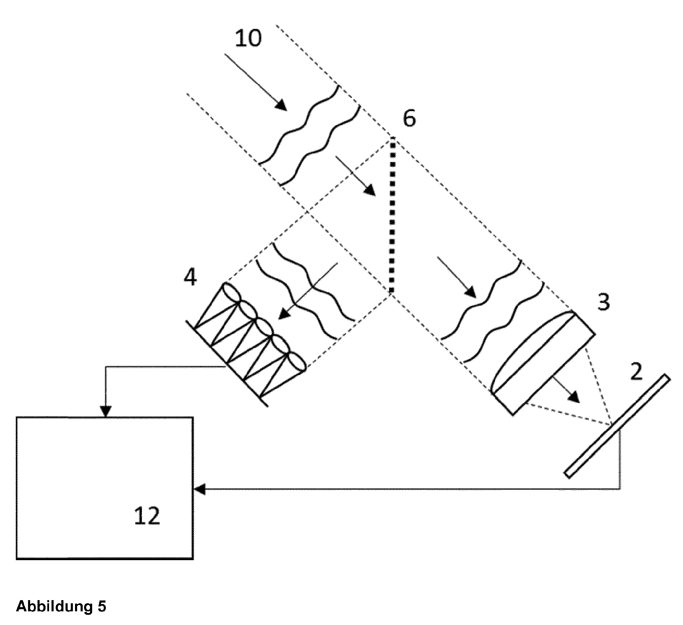

Eine Vorrichtung zur Verwendung als adaptive Optik ist in Abb. 5 skizziert. Die Vorrichtung umfasst wenigstens einen Wellenfrontsensor (4) und eine Recheneinheit (12), die dazu ausgebildet ist, die Messdaten eines elektronischen Bildsensors (2) und die Messdaten des Wellenfrontsensors (4) anzunehmen und zu verarbeiten und mit diesen das hier präsentierte Bildkorrekturverfahren durchzuführen, wobei die Messdaten innerhalb eines vorbestimmten zeitlichen Abstandes zueinander erfasst werden und die Datenerfassung in regelmäßigen Zeitabständen wiederholt wird. Die Vorrichtung kann weiterhin auch einen Strahlteiler (6) umfassen, der das einfallende Licht (10) aufteilt und je einen Teilstrahl auf den Bildsensor (2) und den Wellenfrontsensor (4) führt. Die Vorrichtung kann weiterhin auch eine abbildende Optik (3) und den Bildsensor (2) umfassen.

Das erfindungsgemäße Bildkorrekturverfahren kann als Software in einen herkömmlichen Personal Computer implementiert werden. Insbesondere kann auch ein maschinenlesbares Speichermedium bereitgestellt werden, welches nicht-flüchtig gespeicherte, von einer Recheneinheit ausführbare Befehle zur Durchführung des hier vorgestellten Bildkorrekturverfahrens in einer seiner Ausgestaltungen aufweist. Alle übrigen erwähnten Komponenten sind ebenfalls kommerziell erhältlich.

Bezugszeichenliste

2    Bildsensor
4    Sensor
6    Strahlteiler
8    optisches Ausgleichselement
10   Licht
12   Steuereinrichtung

**Patentansprüche**

1. Rechnergestütztes Bildkorrekturverfahren für Abbildungen mit vorbestimmten optischen Abbildungsfehlern, wobei wenigstens räumlich teilkohärentes Licht auf einen elektronischen, zweidimensionalen Bildsensor mit lichtsensitiven Pixeln geführt wird, **aufweisend die Schritte:**

a) Identifizieren der vorbestimmten optischen Abbildungsfehler mit der vorbestimmten Deformation der Wellenfront des einfallenden Lichtwellenfeldes gegenüber einer ebenen Welle und Bereitstellen einer die Deformation repräsentierenden Phasenmodulation als eine Funktion der Pixelkoordinaten des Bildsensors;

b) Erfassen eines Bildes auf dem Bildsensor;

c) Berechnen eines ersten phasenmodulierten Lichtwellenfeldes aus dem Bild;

d) Berechnen eines korrigierten Lichtwellenfeldes durch zweifache Fourier-Transformation des ersten phasenmodulierten Lichtwellenfeldes unter Entfernen der Phasenmodulation;

e) Annehmen einer ebenen Wellenfront für das korrigierte Lichtwellenfeld durch Gleichsetzen der Phase auf allen Pixelkoordinaten;

f) Berechnen eines zweiten phasenmodulierten Lichtwellenfeldes durch zweifache Fourier-Transformation des korrigierten Lichtwellenfeldes unter Hinzufügen der Phasenmodulation;

g) Ersetzen der Amplituden des zweiten phasenmodulierten Lichtwellenfeldes durch die Amplituden des ersten phasenmodulierten Lichtwellenfeldes unter Beibehaltung der berechneten Phasen des zweiten phasenmodulierten Lichtwellenfeldes auf allen Pixelkoordinaten;

h) Annehmen des Ergebnisses aus Schritt g als erstes phasenmoduliertes Lichtwellenfeld und iterierendes Wiederholen der Schritte d bis h bis zum Erfüllen eines Konvergenzkriteriums;

i) Berechnen eines korrigierten Bildes aus dem korrigierten Lichtwellenfeld bei Erfüllen des Konvergenzkriteriums.

2. Verfahren nach Anspruch 1,
**dadurch gekennzeichnet, dass**
das Vorbestimmen der optischen Abbildungsfehler mittels Messen der Wellenfrontverzerrung des einfallenden Lichtwellenfeldes in einer vorbestimmten Zeitumgebung des Erfassens des Bildes erfolgt.

3. Verfahren nach einem der Ansprüche 1 oder 2,
**dadurch gekennzeichnet, dass**
während der Iteration für das in Schritt d berechnete korrigierte Lichtwellenfeld die Minimierung der pixelweisen Varianz der Phasen als Konvergenzkriterium herangezogen wird.

4. Verfahren nach einem der Ansprüche 1 oder 2,
**dadurch gekennzeichnet, dass**
während der Iteration für das in Schritt f berechnete zweite phasenmodulierte Lichtwellenfeld die Minimierung des pixelweisen Differenzbetrags der Amplituden zum ersten phasenmodulierten Lichtwellenfeld als Konvergenzkriterium herangezogen wird.

5. Verfahren nach einem der vorangehenden Ansprüche,
**dadurch gekennzeichnet, dass**
das Vorbestimmen optischer Abbildungsfehler und das Bereitstellen der Phasenmodulation in regelmäßigen Zeitabständen wiederholt werden.

6. Verfahren nach einem der vorangehenden Ansprüche,
**dadurch gekennzeichnet, dass**
eine Mehrzahl von Bildern zeitlich nacheinander auf dem Bildsensor erfasst wird, wobei zwischen zwei Erfassungszeitpunkten bis zur Konvergenz iteriert wird.

7. Verfahren nach den Ansprüchen 5 und 6,
**dadurch gekennzeichnet, dass**
eine zeitliche Sequenz von Bildern iterativ korrigiert wird, wobei das Vorbestimmen der optischen Abbildungsfehler für die Korrektur einzelner Bilder zeitlich mit der Sequenz Schritt haltend erfolgt.

8. Vorrichtung zur Verwendung als adaptive Optik, wenigstens umfassend einen Wellenfrontsensor und eine Recheneinheit, die dazu ausgebildet ist, die Messdaten eines elektronischen Bildsensors und die Messdaten des Wellenfrontsensors anzunehmen und zu verarbeiten und mit diesen das Bildkorrekturverfahren nach Anspruch 7 durchzuführen, wobei die Messdaten innerhalb eines vorbestimmten zeitlichen Abstandes zueinander erfasst werden und die Datenerfassung in regelmäßigen Zeitabständen wiederholt wird.

9. Maschinenlesbares Speichermedium, aufweisend nicht-flüchtig gespeicherte, von einer Recheneinheit ausführbare Befehle zur Durchführung der Schritte des Verfahrens nach einem der Ansprüche 1 bis 7.

**Abbildung 1**

Abbildung 2 a)

Abbildung 2 b)

Abbildung 2 c)

**Abbildung 3 a)**

**Abbildung 3 b)**

Abbildung 3 c)

**Abbildung 4 a)**

**Abbildung 4 b)**

**Abbildung 5**

Europäisches Patentamt
European Patent Office
Office européen des brevets

## EUROPÄISCHER RECHERCHENBERICHT

Nummer der Anmeldung

EP 16 17 8151

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | LAURENT M MUGNIER ET AL: "Regularized multiframe myopic deconvolution from wavefront sensing", OPTICAL SENSING II, Bd. 3763, 5. Oktober 1999 (1999-10-05), XP055309228, 1000 20th St. Bellingham WA 98225-6705 USA ISSN: 0277-786X, DOI: 10.1117/12.363607 ISBN: 978-1-62841-971-9 * Zusammenfassung * * section 3.1 * ----- | 1-9 | INV. G06T5/00 G06T5/10 |
| A,D | GERCHBERG R W ET AL: "A PRACTICAL ALGORITHM FOR THE DETERMINATION OF PHASE FROM IMAGE ANDDIFFRACTION PLANE PICTURES", OPTIK, WISSENSCHAFTLICHE VERLAG GMBH, DE, Bd. 35, Nr. 2, 1. Januar 1972 (1972-01-01) , Seiten 237-246, XP000615059, ISSN: 0030-4026 * Zusammenfassung * * Abbildung 1 * * section "The Algorithm" * ----- | 1-9 | |

**RECHERCHIERTE SACHGEBIETE (IPC)**

G06T

Der vorliegende Recherchenbericht wurde für alle Patentansprüche erstellt

| Recherchenort | Abschlußdatum der Recherche | Prüfer |
|---|---|---|
| München | 28. Oktober 2016 | Scholz, Volker |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

……………………………………………………………………………………
& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

**In der Beschreibung aufgeführte Nicht-Patentliteratur**

- Deconvolution of images and spectra. Dover Publications, 2012

- A Practical Algorithm for the Determination of Phase from Image and Diffraction Plane Pictures. *Optik,* 1972, vol. 35 (2), 237-246